# EUROPEAN PATENT APPLICATION

(11) **EP 3 566 886 A1**
(43) Date of publication of application: **13.11.2019**
(21) Application number: 17890569.1
(22) Date of filing: 26.12.2017
(51) Int. Cl.: B60C 17/04, B60B 21/12, B60C 1/00

(54) **TIRE/WHEEL ASSEMBLY**

(30) Priority: 05.01.2017 JP 2017000376
(71) Applicant: The Yokohama Rubber Co., Ltd., Tokyo 105-8685 (JP)
(72) Inventor: KIMURA, Kazushi, Hiratsuka-shi Kanagawa 254-8601 (JP); SHIMADA, Genichirou, Hiratsuka-shi Kanagawa 254-8601 (JP); KAGEYAMA, Hirokazu, Hiratsuka-shi Kanagawa 254-8601 (JP)
(74) Representative: Dilg, Haeusler, Schindelmann Patentanwaltsgesellschaft mbH
(86) International application number: PCT/JP2017/046759
(87) International publication number: WO 2018/128134

(57) **Abstract**

There is provided a tire-wheel assembly that has traveling stability equal to or more than that of a run-flat tire of a side reinforcing type under run-flat travel conditions, while maintaining steering stability and ride comfort equal to those of a conventional pneumatic tire under normal travel conditions, and excellent mountability on rims. The tire-wheel assembly includes a run-flat support member that is provided with a support surface formed on an outer circumferential side, and that is disposed on a rim (1) in a cavity portion of a pneumatic tire (2), the run-flat support member being formed by connecting a plurality of foamed bodies (3) in a tire circumferential direction with a band-like member (5), and being disposed in an annular shape on an outer circumference of the rim (1).

## Description

### Technical Field

The present invention relates to a tire-wheel assembly improved in steering stability and riding comfort under normal travel conditions, traveling stability under run-flat travel conditions, and rim assembly.

### Background Art

As a run-flat tire enabling traveling on an emergency such as decrease in internal pressure of a pneumatic tire or a puncture, there is currently a typical tire having structure of supporting a tire tread portion at the time of decrease in internal pressure using a reinforcing layer reinforcing a side wall portion. In this case, the tire has rigidity higher than that of a conventional tubeless tire, so that there is a concern for deterioration in controllability, riding comfort, tire noise, and the like due to increase in tire weight and the like. Besides this, there are proposals including: a tire having structure of supporting a tread portion on an emergency using an inner rim flange portion provided in a rim body, the inner flange portion having a devised shape; and a method in which an inner ring separate from a tire is provided inside the tire to enable emergency travel by supporting the tire using the inner ring at the time of decrease in tire internal pressure or a puncture, for example.

As a method for installing an inner ring in a shape supported by a rim inside a tire, Patent Documents 1 and 2 each propose a method for installing an annular body in a dish-like shape in cross-section. Unfortunately, this method requires the inner ring to be installed on the rim from inside by strongly supporting a tire bead portion against a flange portion of the rim to prevent the tire from detaching (rim removal) from the rim when internal pressure decreases. For this reason, a structure having a support element divided into a plurality of pieces, and change in material are proposed as countermeasures. Unfortunately, this case requires a very complicated and specialized jig, and a technique for installing the inner ring inside the tire, i.e., inserting one of tire beads onto the rim to install the inner ring in place by inserting the inner ring through a slight space between the other of the tire beads and a rim flange, thereby fitting the other of the tire beads onto the rim flange as well.

Other than the annular body in a dish-like shape in cross-section, Patent Documents 3 and 4 each propose increase in height of an inner flange portion of a rim to prevent rim removal and installation of a run-flat support member in a ring-like shape in a rim portion between both inner flange portions.

Unfortunately, this method cannot be used in many cases depending on shape or size of a tire because a wheel in a specific shape, being a rim with an inner flange higher in height than a typical rim, needs to be manufactured, and the run-flat support member preliminarily installed along an outer circumference of the rim, cause the tire to be difficult to be mounted on the rim. About structure and material of the run-flat support member, Patent Document 4 proposes a polyurethane foam elastic member, besides this, Patent Documents 5 and 6 each propose a composite structure including a base material portion made of resin foam, and an outer layer portion made of non-foamed resin, or a reinforcing layer made of the non-foamed resin, for a problem such as durability. Unfortunately, these proposals do not solve any problem of the tire installation. In addition, Patent Documents 7, 8, and 9, and the like each propose a run-flat tire traveling support member in which ribs are radially joined between an inner peripheral surface member and an outer circumferential surface member, being provided along a rim outer circumferential surface of a wheel, for effects such as lightweight and improvement in riding comfort. Unfortunately, these proposals also do not solve any problem when a tire is mounted on a wheel rim.

### Citation List

### Patent Literature

Patent Document 1: JP 10-297226 A
Patent Document 2: JP 2001-519279 T
Patent Document 3: JP 2003-136924 A
Patent Document 4: JP 2004-291725 A
Patent Document 5: JP 2005-313736 A
Patent Document 6: JP 2005-313791 A
Patent Document 7: JP 06-305310 A
Patent Document 8: JP 2007-237904 A
Patent Document 9: JP 2008-296749 A

### Summary of Invention

### Technical Problem

It is an object of the present invention to provide a tire-wheel assembly that has traveling stability equal to or more than that of a run-flat tire of a side reinforcing type under run-flat travel conditions, while maintaining steering stability and ride comfort equal to or more than those of a conventional pneumatic tire under normal travel conditions, and excellent mountability on rims.

### Solution to Problem

To achieve the object above, a tire-wheel assembly according to an embodiment of the present invention includes a run-flat support member that is provided with a support surface formed on an outer circumferential side, and that is disposed on a rim in a cavity portion of a pneumatic tire, the run-flat support member being formed by connecting a plurality of foamed bodies in a tire circumferential direction with a band-like member, and being disposed in an annular shape on an outer circumference of the rim.

### Advantageous Effects of Invention

The tire-wheel assembly according to the embodiment of the present invention includes the run-flat support member that is provided with the support surface on the outer circumferential side, and that is formed by connecting the plurality of foamed bodies in the tire circumferential direction with the band-like member, the run-flat support member being disposed in an annular shape on the outer circumference of the rim. This enables the tire-wheel assembly to have traveling stability and durability under run-flat travel conditions while maintaining excellent steering stability and ride comfort under normal travel conditions, and improve mountability on rims beyond conventional levels.

When having support means for suspending the band-like member, the foamed bodies can be reliably fixed on the rim by the band-like member. It is preferable that the band-like member has a fastening mechanism capable of repeatedly adjusting its length in the tire circumferential direction in a flexible manner to enable the plurality of foamed bodies to be easier mounted on a rim.

Each of the foamed bodies may have a density of 0.05 g/cm³ to 0.3 g/cm³ to enable the run-flat support member to be reduced in weight. Each of the foamed bodies also may have a compression strength of 20 N/cm² or more at 10% strain, and a bending strength of 30 N/cm² or more at 5% strain. When the compression strength and/or the bending strength of each of the foamed bodies are set within the range described above, durability under run-flat travel conditions can be further improved.

The tire-wheel assembly may have a cross-sectional area of support means containing the foamed bodies, the area being one-fourth or more of a cross-sectional area of a cavity portion of a pneumatic tire, in a cross section in a meridian direction of the pneumatic tire. In addition, the support means may be brought into contact with at least the rim surface in the cavity portion of the pneumatic tire and the inside of a tire bead portion.

As the support means, a through-hole that opens in the tire circumferential direction of each of the foamed bodies may be used. Alternatively, the support means may be composed of a metal member, a resin member, or a rubber member, being fixed to the foamed bodies inward in a tire radial direction.

The foamed bodies each may include at least two protrusions that protrude outward in the tire radial direction and extend in the tire circumferential direction, and a recessed portion formed between the protrusions, and the band-like member may be disposed in the recessed portion around the entire circumference of the tire. In addition, the foamed bodies each may include legs formed along respective sides of the corresponding one of the protrusions and fixed on the rim, and a hollow portion is formed by inner circumferential surfaces of the protrusions and the legs, and an outer circumferential surface of the rim. The hollow portion may occupy an area in a cross section in the meridian direction of the pneumatic tire, the area being one-fourth or more of a cross-sectional area of the cavity portion of the pneumatic tire.

The foamed bodies each may be a polyurethane foam made of a foamable compound that is mainly composed of polyol, polyisocyanate, and water. The polyurethane foam may further include at least one selected from a filler, a fiber, an adhesion promoter, a surfactant, and an anti-aging agent.

### Brief Description of Drawings

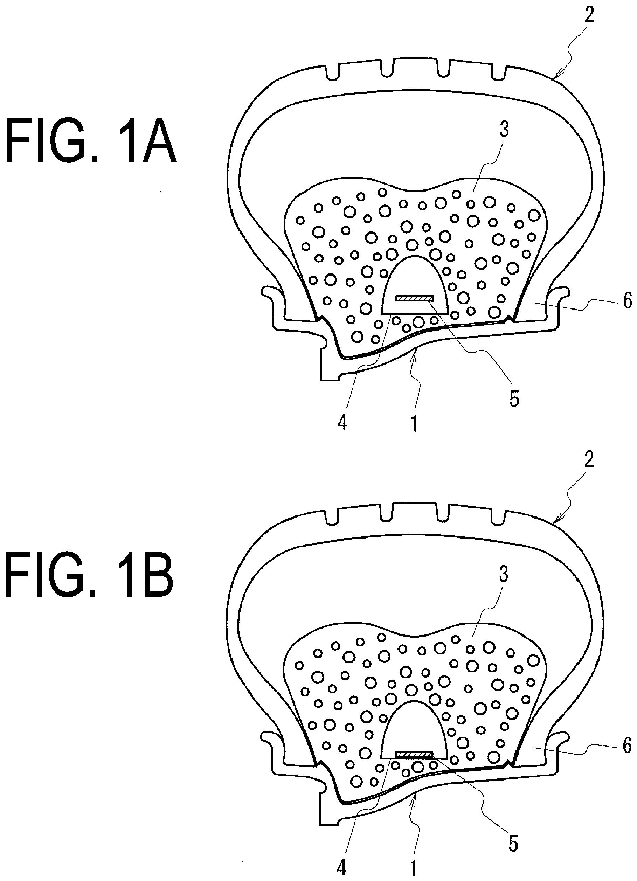

FIGS. 1A and 1B are each a cross-sectional view in a tire meridian direction schematically illustrating an example of a tire-wheel assembly according to an embodiment of the present invention, FIGS. 1A and 1B being respectively cross-sectional views of before and after a foamed body is fixed on a rim with a band-like member.

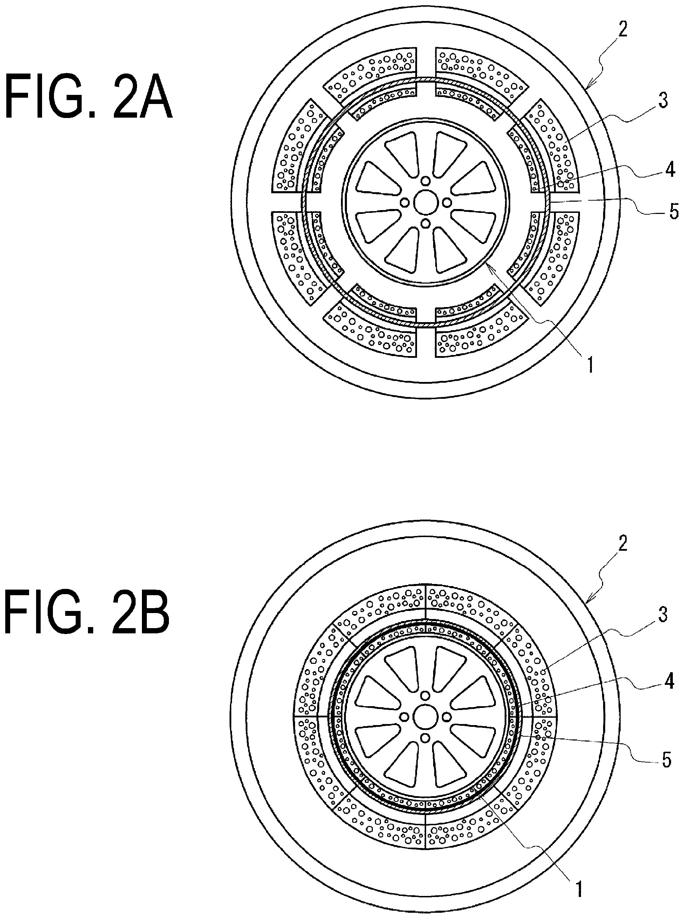

FIGS. 2A and 2B are each a cross-sectional view in a tire equator direction schematically illustrating another example of the tire-wheel assembly according to the embodiment of the present invention, FIGS. 2A and 2B being respectively cross-sectional views of before and after foamed bodies are fixed on a rim with a band-like member.

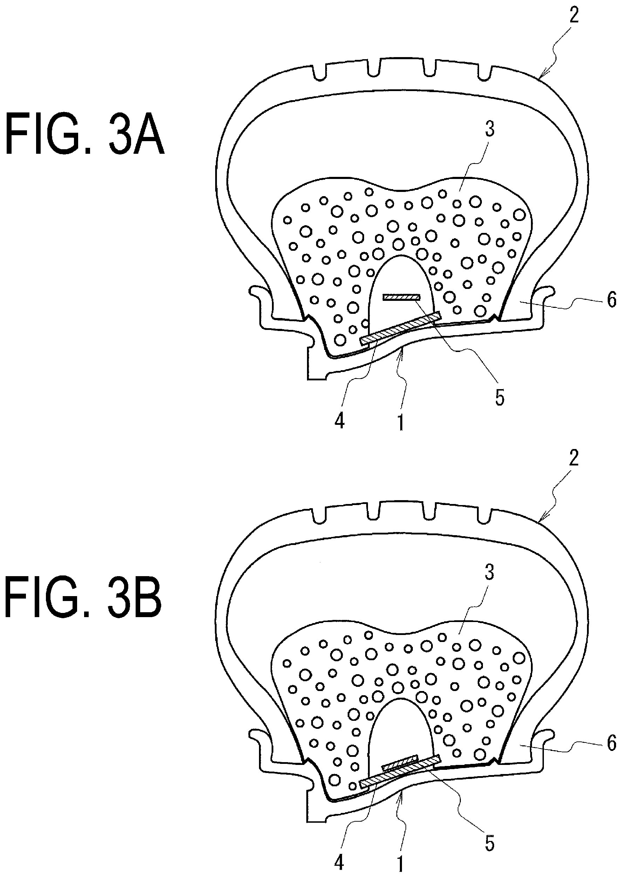

FIGS. 3A and 3B are each a cross-sectional view in the tire meridian direction schematically illustrating yet another example of the tire-wheel assembly according to the embodiment of the present invention, FIGS. 3A and 3B being respectively cross-sectional views of before and after a foamed body is fixed on a rim with a band-like member.

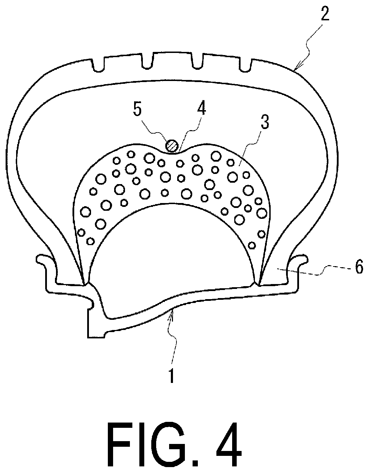

FIG. 4 is a cross-sectional view in the tire meridian direction schematically illustrating yet another example of the tire-wheel assembly according to the embodiment of the present invention.

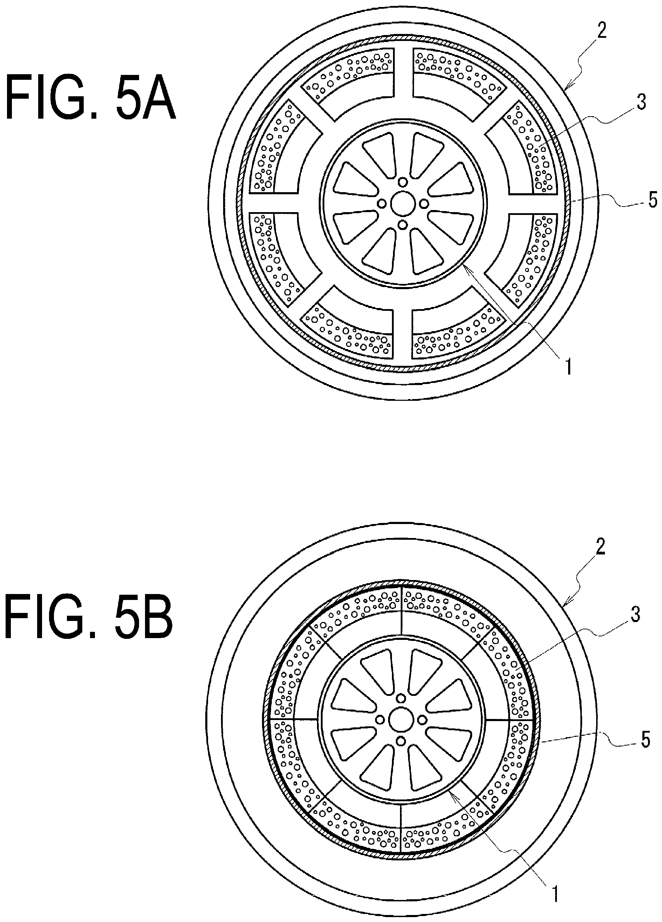

FIGS. 5A and 5B are each a cross-sectional view in the tire equator direction of the embodiment of FIG. 4, FIGS. 5A and 5B being respectively cross-sectional views of before and after foamed bodies are fixed on a rim with a band-like member.

### Description of Embodiments

FIGS. 1A and 1B are each a cross-sectional view in a tire meridian direction schematically illustrating an example of a tire-wheel assembly according to an embodiment of the present invention. In the tire-wheel assembly illustrated in FIG. 1, a pneumatic tire 2 is mounted on a rim 1 of a wheel, and a plurality of foamed bodies 3 is disposed in a cavity portion of the pneumatic tire 2 while being connected to each other and fixed on the rim 1 by a band-like member 5. FIG. 1A illustrates a state in which the band-like member 5 is inserted into the inside of the plurality of foamed bodies 3 disposed in the tire circumferential direction in a tire cavity. When the band-like member 5 is tightened, the plurality of foamed bodies 3 is fixed in an annular shape on the rim 1 as illustrated in FIG. 1B. Then, the foamed bodies 3 are brought into contact with the entire surface of the rim 1 of the wheel in the tire cavity and an inner surface of a bead portion 6 of the pneumatic tire 2. Each of the foamed bodies 3 in contact with the rim 1 and the bead portion 6 while covering them enables stable traveling. The plurality of the foamed bodies 3 disposed in an annular shape on the outer circumference of the rim serves as a run-flat support member. In other words, the run-flat support member has an outer circumferential side serving as a support surface that supports an inner circumferential surface of the pneumatic tire under run-flat travel conditions, and achieves traveling stability more than that of a run-flat tire of a side reinforcing type. The plurality of foamed bodies is connected to each other by the band-like member, so that mountability on rims is favorable. The run-flat support member is lightweight and is not brought into contact with the inner circumferential surface of the pneumatic tire under normal travel conditions, so the steering stability and ride comfort comparable to that of conventional pneumatic tires can be ensured.

The foamed bodies 3 each may have support means 4 for suspending the band-like member 5. The foamed bodies 3 adjacent to each other in the circumferential direction are connected to each other by stretching the band-like member 5 on the support means 4 of each other. As illustrated in FIGS. 1 and 2, when the foamed bodies 3 are disposed in the tire cavity, the support means 4 may be composed of through holes that are open in the tire circumferential direction. FIG. 2A schematically illustrates a state in which the band-like member 5 is inserted and disposed in an annular shape through the through-holes of the plurality of foamed bodies 3 disposed in the tire circumferential direction in the tire cavity (description of the fastening mechanism of the band-like member 5 is eliminated). The plurality of foamed bodies 3 disposed in the tire circumferential direction is disposed in contact with or separated from each other in a state before being fastened by the band-like member 5. When the band-like member 5 is tightened from this state, as illustrated in FIG. 2B, the band-like member 5 is reduced in length in the tire circumferential direction and diameter to press the support means 4 composed of a bottom portion of each of the foamed bodies 3 inward in the tire radial direction, and then the foamed bodies 3 are fixed on an outer circumference of the rim 1. While the example of FIG. 2B shows that the adjacent foam bodies 3 are in contact with each other in the foamed bodies 3 disposed in an annular shape on the outer circumference of the rim, at least one pair of the adjacent foamed bodies 3 may be disposed without being brought into contact with each other. This allows a fastening mechanism of the band-like member 5 to be accommodated therein, for example.

While in the example of each of FIGS. 1 and 2, the support means 4 of the band-like member 5 is composed of through-holes formed in the tire circumferential direction of the foamed bodies 3, the support means 4 of the band-like member 5 is not limited to the example. For example, the support means 4 may be composed of a metal member, a resin member, or a rubber member, being fixed in the tire lateral direction inward of the foamed bodies 3 in the tire radial direction (hereinafter, also referred to collectively as a "fixing member"). In FIGS. 3A and 3B, each of the foamed bodies 3 is provided inside with a cavity that opens inward in the tire radial direction therein. The fixing member is disposed traversing the radially inward opening in the tire lateral direction. In the illustrated example, both end portions of the fixing member are embedded in each of the foamed bodies 3, and the fixing member may be molded by insert molding to embed the both end portions when each of the foamed bodies 3 is molded. An aspect of fixing the fixing member to a foamed body is not particularly limited, and only one end of the fixing member may be embedded in each of the foamed bodies 3, or the fixing member may be fixed with an adhesive or the like instead of embedding the fixing member.

The fixing member may extend from one end to the other end in the tire circumferential direction of each of the foamed bodies 3, or may be disposed on only a portion thereof. Additionally, a plurality of fixing members may be disposed intermittently in each of the foamed bodies 3 in the circumferential direction, or may be disposed only at both end portions of each of the foamed bodies 3 in the circumferential direction. Material of the fixing member is not particularly limited, and a material typically used in pneumatic tires such as metal, resin, rubber, or the like may be applied.

FIG. 4 is a cross-sectional view in the tire meridian direction schematically illustrating yet another example of the tire-wheel assembly according to the embodiment of the present invention. In the tire-wheel assembly illustrated in FIG. 4, a pneumatic tire 2 is mounted on a rim 1 of a wheel, and a plurality of foamed bodies 3 is disposed in a cavity portion of the pneumatic tire 2 while being connected to each other and fixed on the rim 1 by a band-like member 5. In the present embodiment, the foamed bodies 3 each include at least two protrusions that protrude outward in the tire radial direction and extend in the tire circumferential direction, and a recessed portion formed between the protrusions, and the band-like member 5 is disposed in the recessed portion around the entire circumference of the tire. In other words, the recessed portion formed between the protrusions serves as support means 4. When the band-like member 5 is tightened, the plurality of foamed bodies 3 is fixed in an annular shape on the rim 1.

The foamed bodies 3 each may have legs on respective sides in the tire lateral direction. The legs may be formed on respective sides of each of the protrusions described above along the tire circumferential direction, and may be disposed and fixed on the rim. This enables at least a portion of a bottom portion of each of the foamed bodies 3 to be prevented from being brought into contact with an outer circumference of the rim 1 of the wheel in a cavity of the tire. In this case, a hollow portion is formed by inner circumferential surfaces of the protrusions and the legs, and an outer circumferential surface of the rim. The hollow portion may occupy an area in a cross section in a meridian direction of the pneumatic tire, the area being one-fourth or more of a cross-sectional area of a cavity portion of the pneumatic tire.

FIG. 5 is an explanatory diagram schematically illustrating a cross-section in the tire equator direction of the tire-wheel assembly of FIG. 4. FIG. 5A exemplifies a state before the foamed bodies 3 are fixed by the band-like member 5 in a tire cavity. In the state, the band-like member 5 is disposed in the tire radial direction outward of the plurality of foamed bodies 3 disposed in the tire circumferential direction, around the entire circumference of the tire. The plurality of foamed bodies 3 disposed in the tire circumferential direction is disposed in contact with or separated from each other in a state before being fastened by the band-like member 5. When the band-like member 5 is tightened from this state, as illustrated in FIG. 5B, the band-like member 5 is reduced in length in the tire circumferential direction and diameter to press the foamed bodies 3 inward in the tire radial direction, and then the foamed bodies 3 are fixed on an outer circumference of the rim 1.

In the present invention, material forming the foamed bodies 3 is not particularly limited, and examples thereof may include foamable resin formed by foaming polyurethane, polystyrene, polyolefin, phenolic resin, polyvinyl chloride, urea resin, silicone, polyimide, melamine resin, or the like. Among them, polyurethane foam is preferable.

The polyurethane foam is a foamable resin composed of a polymer having urethane bonds (-NHCOO-) formed by condensation of a compound having an isocyanate group (-NCO) and a compound having a hydroxyl group (-OH). Examples of the compound having an isocyanate group include a polyisocyanate compound having two or more isocyanate groups per molecule. Examples of the polyisocyanate compound include: a diisocyanate compound such as aromatic polyisocyanates such as tolylene diisocyanate (TDI), diphenylmethane diisocyanate (MDI), phenylene diisocyanate, xylylene diisocyanate (XDI), tetramethylxylylene diisocyanate (TMXDI), tolidine diisocyanate (TODI), naphthalene diisocyanate (NDI), and the like; aliphatic polyisocyanates such as hexamethylene diisocyanate (HDI), trimethylhexamethylene diisocyanate (TMHDI), lysine diisocyanate, norbornane diisocyanate methyl (NBDI), and the like; alicyclic polyisocyanates such as transcyclohexane-1,4-diisocyanate, isophorone diisocyanate (IPDI), H6XDI (hydrogenated XDI), H12MDI (hydrogenated MDI), H6TDI (hydrogenated TDI), and the like; a polyisocyanate compound such as polymethylene-polyphenylene polyisocyanate, or the like; carbodiimide-modified polyisocyanates of these isocyanate compounds; isocyanurate-modified polyisocyanates of these isocyanate compounds; urethane prepolymers obtained by reacting these isocyanate compounds with the subsequently described polyol compounds; and the like. These polyisocyanate compounds may be used alone or may be used in any combination of two or more kinds.

Examples of the compound having a hydroxyl group include a polyol compound having two or more hydroxyl groups per molecule. Examples of the polyol compound include polyether polyol, polyester polyol, polycarbonate polyol, another polyol and, a mixture of these kinds of polyol, and the like, for example. Among them, polycarbonate polyol is preferable.

Examples of the polyether polyol include: for example, polyol obtained by adding at least one kind selected from ethylene oxide, propylene oxide, butylene oxide, styrene oxide, and the like, to at least one kind selected from polyhydric alcohols such as ethylene glycol, diethylene glycol, propylene glycol, dipropylene glycol, glycerin, 1,1,1-trimethylolpropane, 1,2,5-hexanetriol, 1,3-butanediol, 1,4-butanediol, 4,4'-dihydroxyphenylpropane, 4,4'-dihydroxyphenylmethane, pentaerythritol, and the like; polyoxytetramethylene oxide; and the like.

Examples of the polyester polyol include: a condensation polymer of one or more kinds of low-molecular polyol such as ethylene glycol, propylene glycol, butanediol, pentanediol, hexanediol, cyclohexanedimethanol, glycerin, 1,1,1-trimethylolpropane, and the like, and one or more kinds of glutaric acid, adipic acid, pimelic acid, suberic acid, sebacic acid, terephthalic acid, isophthalic acid, dimer acid, another low molecular carboxylic acid, and oligomeric acids; a ring-opening polymer such as propionlactone, and valerolactone; and the like.

The polycarbonate polyol is produced using a reaction such as a demethanol-condensation reaction between polyol and dimethyl carbonate, a dephenol condensation reaction of polyol and diphenyl carbonate, or a deethylene glycol condensation reaction of polyol and ethylene carbonate. Examples of the polyol used in these reactions include: for example, saturated or unsaturated various glycols such as 1,6-hexanediol, diethylene glycol, triethylene glycol, propylene glycol, 1,3-butanediol, 1,4-butanediol, neopentyl glycol, pentanediol, 3-methyl-1, 5-pentanediol, octanediol, 1,4-butynediol, dipropylene glycol, tripropylene glycol, and polytetramethylene ether glycol; alicyclic glycols such as 1,4-cyclohexane diglycol, and 1,4-cyclohexane dimethanol; and the like.

Examples of the other polyol include: for example, polymer polyols; polybutadiene polyols; hydrogenated polybutadiene polyols; acrylic polyols; low-molecular polyols such as ethylene glycol, diethylene glycol, propylene glycol, dipropylene glycol, butanediol, Pentanediol, hexanediol, polyethylene glycol laurylmine (e.g., N, N-bis (2-hydroxyethyl) laurylamine), polypropylene glycol laurylmine (e.g., N, N-bis (2-methyl-2-hydroxyethyl) laurylamine); polyethylene glycoloctyl amine (e.g., N, N-bis (2-hydroxyethyl) octylamine), polypropylene glycol octyl amine (e.g., N, N-bis (2-methyl-2-hydroxyethyl) octylamine), polyethylene glycolstearylamine (e.g., N, N-Bis (2-hydroxyethyl) stearylamine), polypropylene glycol stearylamine (e.g., N, N-bis (2-methyl-2-hydroxyethyl) stearylamine), tris-(2-hydroxyethyl) isocyanurate, etc.; and the like.

In the present invention, the material forming the foamed body is preferably polyurethane foam composed of polyol, polyisocyanate, and a foaming compound including water or a foaming agent as a main component. In addition, the material is preferably polyurethane foam composed of polyol, polyisocyanate, and water or a foaming agent, as main components, and carbon dioxide gas produced by reactions of the respective components is a main component of a foaming component. Further, polyurethane foam composed of polycarbonate diol, polycarbonate diol, and a foamable compound including water or a foaming agent as main components, is preferable. The foaming agent is not particularly limited, and may be any one of an inorganic foaming agent and an organic foaming agent. Examples of the inorganic foaming agent include ammonium carbonate, ammonium hydrogen carbonate, sodium hydrogen carbonate, ammonium nitrite, sodium borohydride, and the like. Examples of the organic foaming agent include a carbonamide foaming agent, a nitroso foaming agent, a sulfonylhydrazide foaming agent, an azo foaming agent, an azide foaming agent, and the like.

Examples of the carbonamide foaming agent include azodicarbonamide (ADCA) and the like, and examples of the nitroso foaming agent include N,N'-dinitroso-pentamethylene tetramine (DPT), N,N'-dimethyl-N, N'-dinitroso-terephthalamide, and the like. Examples of the sulfonylhydrazide foaming agent include benzenesulfonylhydrazide (BSH), p,p'-oxybis (benzenesulfonylhydrazide) (OBSH), toluenesulfonylhydrazide (TSH), diphenylsulfone-3,3'-disulfonylhydrazide, and the like. Examples of the azo foaming agent include azobisisobutyronitrile (AZBN), azobiscyclohexylnitrile, azodiaminobenzene, bariumazodicarboxylate, and the like. Examples of the azide foaming agent include calciumazide, 4,4'-diphenyldisulfonylazide, p-toluenesulfonylazide, and the like. These foaming agents may be used individually or by mixing two or more kinds thereof.

The polyurethane foam may further contain at least one selected from a filler, a fiber, an adhesion promoter, a surfactant, and an anti-aging agent. Containing these compounding agents enables durability under run-flat travel conditions to be further improved.

In the present invention, each of the foamed bodies 3 has a density that is preferably 0.05 g/cm³ to 0.30 g/cm³, and more preferably 0.08 g/cm³ to 0.25 g/cm³. When a foamed body has a density within a range as described above, the run-flat support member can be further reduced in weight. In the present specification, the density of the foamed body can be measured in accordance with JIS A 9511.

Each of the foamed bodies 3 has a compression strength at 10% strain that is preferably 8 N/cm² or more, more preferably 20 N/cm² or more, and further preferably from 20 N/cm² to 30 N/cm². When a foamed body has a compression strength of 8 N/cm² or more, load resistance and durability can be improved. In the present specification, compressive strength of a foamed body can be measured as the compressive strength at 10% strain in accordance with JIS A 9511.

Each of the foamed bodies 3 has a bending strength at 5% strain that is preferably 15 N/cm² or more, more preferably 30 N/cm² or more, and further preferably from 30 N/cm² to 40 N/cm². When a foamed body has a bending strength of 15 N/cm² or more, strain resistance can be improved. In the present specification, bending strength of a foamed body can be measured as a bending strength at 5% strain in accordance with JIS A 9511.

The band-like member 5 may be composed of a band made of flexible metal, resin, fabric, or the like, for example. The band-like member 5 is inserted through the support means 4 of each of the foamed bodies 3 or suspended by the support means 4. Then, the band-like member 5 is formed in an annular shape around the outer circumference of the rim 1, and then a joint of the band-like member 5 is fixed in a fastenable manner. When the band-like member 5 is tightened and fixed from a loose state, the foamed bodies 3 are fixed on the outer circumference of the rim. The band-like member 5 may include a fastening mechanism capable of repeatedly adjusting length of the band-like member 5 in the tire circumferential direction in an extensible manner. Providing a fastening mechanism as described above enables the foamed bodies 3 to be repeatedly attached on and removed from the outer circumference of the rim. The fastening mechanism described above is not particularly limited, and fixing means of a typical fastening type may be used. For example, examples of fixing means include resin fixing means for a string, fastening means including engaging claws that engage and disengage with the band-like member provided at ends each with an engagement groove, fastening means that winds an end of a band by turning a tightening screw, and the like.

The band-like member 5 can be adjusted in length in the tire circumferential direction in an extensible manner, so that a plurality of foamed bodies preliminarily connected can be easily mounted on a rim. For example, when the plurality of foamed bodies 3 is pushed sequentially into a tire cavity through between a bead portion and a rim flange of a tire, even a disordered direction of each of the foamed bodies 3 inserted can be adjusted in the tire circumferential direction by pulling the band-like member 5. Additionally, after all the foamed bodies 3 are inserted into the tire cavity, the foamed bodies 3 can be easily fixed on the outer periphery of the rim 1 by tightening and fixing the band-like member 5.

In a cross-section in the meridian direction of the tire-wheel assembly of the present invention, the foamed bodies 3 have a cross-sectional area that is preferably one-fourth or more of a cross-sectional area of the cavity portion of the pneumatic tire, and more preferably one-half to three-fourths thereof. Here, the cross-sectional area of the cavity portion of the pneumatic tire is defined as an area surrounded by the inner circumference of the pneumatic tire and the outer circumference of the rim of the wheel. When the foamed bodies 3 have a cross-sectional area that is one-fourth or more of the cross-sectional area of the cavity portion of the pneumatic tire, a tire having superior durability can be obtained.

The present invention is further explained below by examples. However, the scope of the present invention is not limited to these examples.

### Examples

### Examples 1 to 3

Foamable compounds consisting of composition of "foamed bodies 1 to 3" described in Table 1 were weighed and stirred at room temperature (25°C) for one minute. After the foamable compounds were immediately injected into a mold with a predetermined shape, foaming began, and no foaming phenomenon was observed in approximately 30 minutes. The reactant was further allowed to stand for 24 hours, and the foaming and polymerization reaction were completed to obtain the foamed bodies 1 to 3.

Using the foamed bodies 1 to 3 obtained as described above, compressive strength and bending strength were measured according to the following measurement method.

### Compression strength

Using the foamed bodies obtained, a test piece for measurement was produced in accordance with JIS A9511. Using this test piece for measurement, compression tests were performed in accordance with JIS A9511 under conditions of a temperature of 23°C and a deformation rate of 5 mm/minute, and compressive strength at 10% strain was measured.

### Bending strength

Using the foamed bodies obtained, a test piece for measurement was produced in accordance with JIS A9511. Using this test piece for measurement, bending tests were performed in accordance with JIS A9511 under conditions of a temperature of 23°C and a deformation rate of 20 mm/minute, and bending strength at 5% strain was measured.

A foamed body having the cross-sectional shape illustrated in FIG. 2 and a run-flat support member including fixing means were molded. A pneumatic tire mounted with the run-flat support member had a size of 185/65R15 and a bore height of 113 mm. The run-flat support member (foamed body) had a height of 68 mm in the tire radial direction, and a cross-sectional area of three-fifths of the cross-sectional area of the cavity portion of the pneumatic tire. In addition, the run-flat support member was divided into to eight divisions in the tire circumferential direction, and each foamed body divided had a length of 149.5 mm in the circumferential direction.

Each of the foamable compounds consisting of composition of "foamed bodies 1 to 3" described in Table 1 was weighed and stirred at room temperature (25°C) for one minute. After a fixing member made of resin (length 149 mm, width 60 mm, thickness 2 mm) was immediately inserted into a mold for molding a foamed body in the cross-sectional shape of FIG. 2 to be molded by insert molding, the fixing member was allowed to stand for 24 hours and 30 minutes to complete foaming and polymerization reaction, thereby obtaining the foamed body with the fixing member. A plurality of the foamed bodies was connected by inserting a band-like member made of cloth (width 55 mm, thickness 1 mm) through the inside of each of the foamed bodies and outward of the fixing member in the tire radial direction to form a run-flat support member. The run-flat support member obtained was inserted into a tire cavity from between a bead portion of a pneumatic tire and a rim flange, and then the band-like member was tightened and fixed to dispose the run-flat support member on an outer circumference of a rim. The obtained tire-wheel assembly was used to evaluate performance in traveling tests under normal travel conditions and run-flat travel conditions, and weight of the tire-wheel assembly, by the following methods.

### Tests for steering stability and ride comfort under normal travel conditions

Each test tire was mounted on a wheel with a rim size of 18 x 7.5 J, and mounted on a test vehicle, and then inflated to an air pressure of 230 kPa. The test vehicle traveled on a test course having an asphalt road surface at an average speed of 80 km/h, and then a driver evaluated steering stability and ride comfort by sensory evaluation. This evaluation was performed by three test drivers to acquire an average of evaluation results. The evaluation results are expressed as index values with the value of Conventional Example being defined as 100. Larger index values indicate superior steering stability and ride comfort under normal travel conditions. As a tire of Conventional Example, a run-flat tire having a side reinforcing resin body as a support member was used.

### Traveling test under run-flat travel conditions

Each test tire was mounted on a wheel with a rim size of 18 x 7.5 J, and mounted on a test vehicle, and then inflated to an air pressure of 230 kPa while removing a valve core of the right side drive wheel. The test vehicle traveled on a test course having an asphalt road surface at an average speed of 80 km/h. The traveling was continued until a driver felt vibration caused by a breakdown of the tire, and then the traveling distance was measured. Such measurement was performed by three test drivers to acquire an average of the traveling distances. The evaluation results are expressed as index values with the value of Conventional Example being defined as 100. Larger index values indicate superior run-flat durability. As a tire of Conventional Example, a run-flat tire having a side reinforcing resin body as a support member was used.

### Weight of tire-wheel assembly

Each test tire was mounted on a wheel with a rim size of 18 x 7.5 J, and inflated to an air pressure of 230 kPa, and then weight of a tire-wheel assembly was measured. Obtained results are expressed as index values with the value of Conventional Example being defined as 100. Smaller index values indicate lower weight of the tire-wheel assembly, i.e., superior results. The tires of the Conventional Example were the same as those described above.

### Example 4

A run-flat support member including support means 4 illustrated in FIG. 1 being a through hole opened in a foamed body was produced in the same manner as in Example 2 described above, and was mounted on a pneumatic tire to assemble a tire-wheel assembly. For the tire-wheel assembly obtained, traveling tests under normal travel conditions and run-flat travel conditions, and measurement of weight of the tire-wheel assembly, were performed by the methods described above.

**[Table 1]**

| | | Conventional Example | Example 1 | Example 2 | Example 3 | Example 4 |
|---|---|---|---|---|---|---|
| Shape of run-flat support member | | | FIG. 2 | FIG. 2 | FIG. 2 | FIG. 1 |
| Composition of foamed body | | | Foamed body 1 | Foamed body 2 | Foamed body 3 | Foamed body 2 |
| Polyol compound 1 | Part by mass | | 100 | 100 | 100 | 100 |
| Amine compound | Part by mass | | 0.4 | 0.4 | 0.4 | 0.4 |
| Catalyst | Part by mass | | 0.5 | 0.5 | 0.5 | 0.5 |
| Foam stabilizer | Part by mass | | 1.2 | 1.2 | 1.2 | 1.2 |
| Isocyanate compound 1 | Part by mass | | 20 | 40 | 60 | 40 |
| Isocyanate compound 2 | Part by mass | | 20 | 40 | 60 | 40 |
| Water | Part by mass | | 5 | 10 | 10 | 10 |
| Density | g/cm³ | | 0.18 | 0.16 | 0.15 | 0.16 |
| Compression strength | N/cm² | | 34 | 51 | 55 | 51 |
| Bending strength | N/cm² | | 66 | 82 | 85 | 82 |
| Steering stability and riding comfort under normal travel conditions | Index value | 100 | 100 | 99 | 99 | 100 |
| Traveling stability under run-flat travel conditions | Index value | 100 | 107 | 115 | 109 | 114 |
| Weight of tire-wheel assembly | Index value | 100 | 98 | 95 | 94 | 95 |

Kinds of raw materials used in Table 1 are described below.
- Polyol compound: polycarbonate diol, T5651, made by Asahi Kasei
- Amine Compound: 1,4-diazabicyclo [2.2.2] octane, made by Tokyo Chemical Industry Co., Ltd.
- Catalyst: tin octylate, Neostan U-28, made by Nitto Kasei Co., Ltd.
- Foam stabilizer: silicone oil, FZ3703 made by Dow Corning Toray Co., Ltd.
- Isocyanate compound 1: polymethylene polyphenyl polyisocyanate, NCO group content 31%, SumiJoule 44V10 made by Sumika Bayer Urethane Co., Ltd.
- Isocyanate compound 2: polymethylene polyphenyl polyisocyanate, NCO group content 31%, SumiJoule 44V20 made by Sumika Bayer Urethane Co., Ltd.

It is found that the tire-wheel assembly of each of Examples 1 to 4 had excellent durability under run-flat travel conditions. In addition, the foamed bodies 1 to 3 each had a low density of approximately 0.2 g/cm³ to achieve lighter weight and more durable characteristics than those of Conventional Example.

### Reference Signs List

- 1: Rim
- 2: Pneumatic tire
- 3: Foamed body
- 4: Support means
- 5: Band-like member
- 6: Bead portion

## Claims

1. A tire-wheel assembly comprising:
a run-flat support member that is provided with a support surface formed on an outer circumferential side, and that is disposed on a rim in a cavity portion of a pneumatic tire,
the run-flat support member being formed by connecting a plurality of foamed bodies in a tire circumferential direction with a band-like member, and being disposed in an annular shape on an outer circumference of the rim.

2. The tire-wheel assembly according to claim 1, wherein
the foamed bodies each have support means for suspending the band-like member.

3. The tire-wheel assembly according to claim 1 or 2, wherein
the band-like member includes a fastening mechanism capable of repeatedly adjusting length of the band-like member in the tire circumferential direction in an extensible manner.

4. The tire-wheel assembly according to any one of claims 1 to 3, wherein
the foamed bodies each have a density of 0.05 g/cm³ to 0.3 g/cm³.

5. The tire-wheel assembly according to any one of claims 1 to 4, wherein
the foamed bodies each have a compression strength of 20 N/cm² or more at 10% strain, and a bending strength of 30 N/cm² or more at 5% strain.

6. The tire-wheel assembly according to any one of claims 1 to 5, wherein
the foamed bodies have a cross-sectional area that is one-fourth or more of a cross-sectional area of the cavity portion of the pneumatic tire, in a cross section in a meridian direction of the pneumatic tire.

7. The tire-wheel assembly according to any one of claims 2 to 6, wherein
the support means is a through hole opened in each of the foamed bodies in the tire circumferential direction.

8. The tire-wheel assembly according to any one of claims 2 to 6, wherein
the support means is a metal member, a resin member, or a rubber member, being fixed to the foamed bodies inward in a tire radial direction.

9. The tire-wheel assembly according to any one of claims 1 to 6, wherein
the foamed bodies each include at least two protrusions that protrude outward in the tire radial direction and extend in the tire circumferential direction, and a recessed portion formed between the protrusions, and the band-like member is disposed in the recessed portion around the entire circumference of the pneumatic tire.

10. The tire-wheel assembly according claim 9, wherein
the foamed bodies each include legs formed along respective sides of the corresponding one of the protrusions and fixed on the rim, and a hollow portion is formed by inner circumferential surfaces of the protrusions and the legs, and an outer circumferential surface of the rim, the hollow portion occupying an area in the cross section in the meridian direction of the pneumatic tire, being one-fourth or more of the cross-sectional area of the cavity portion of the pneumatic tire.

11. The tire-wheel assembly according to any one of claims 1 to 10, wherein
the foamed bodies each is a polyurethane foam made of a foamable compound that is mainly composed of polyol, polyisocyanate, and water or a foaming agent.

12. The tire-wheel assembly according claim 11, wherein
the polyurethane foam further includes at least one selected from a filler, a fiber, an adhesion promoter, a surfactant, and an anti-aging agent.
